(19) Europäisches Patentamt
European Patent Office
Office européen des brevets

(11) **EP 2 312 345 B1**

(12) **EUROPÄISCHE PATENTSCHRIFT**

(45) Veröffentlichungstag und Bekanntmachung des Hinweises auf die Patenterteilung:
**16.03.2016   Patentblatt 2016/11**

(51) Int Cl.:
***G02B 5/18*** *(2006.01)*          ***B42D 25/328*** *(2014.01)*
***B42D 25/324*** *(2014.01)*

(21) Anmeldenummer: **10013503.7**

(22) Anmeldetag: **11.10.2010**

(54) **Gitterbild mit aneinandergrenzenden Gitterfeldern**

Diffraction grating image with adjoining grating fields

Image à réseau de diffraction présentant des champs de réseau adjacents

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2009   DE 102009049222**

(43) Veröffentlichungstag der Anmeldung:
**20.04.2011   Patentblatt 2011/16**

(73) Patentinhaber: **Giesecke & Devrient GmbH
81677 München (DE)**

(72) Erfinder:
• **Dichtl, Marius, Dr.
81371 München (DE)**
• **Gerhardt, Thomas
81539 München (DE)**

(56) Entgegenhaltungen:
**EP-A2- 0 467 601          WO-A1-2005/038500
WO-A2-2005/071444**

EP 2 312 345 B1

**Beschreibung**

Die Erfindung betrifft ein Gitterbild mit einer Vielzahl von aneinandergrenzenden Gitterfeldern, ein Verfahren zur Herstellung eines derartigen Gitterbilds, ein Sicherheitselement, ein Sicherheitspapier und einen Datenträger mit einem solchen Gitterbild.

Zur Echtheitsabsicherung von Kreditkarten, Banknoten und anderen Wertdokumenten werden seit einigen Jahren Hologramme, holographische Gitterbilder und andere hologrammähnliche Beugungsstrukturen eingesetzt. Im Banknoten- und Sicherheitsbereich werden im Allgemeinen holographische Beugungsstrukturen verwendet, die sich durch Prägung von holographisch erzeugten Gitterbildern in thermoplastisch verformbare Kunststoffe oder UV-härtbaren Lack auf Foliensubstraten herstellen lassen.

Echte Hologramme entstehen dabei durch Beleuchtung eines Objekts mit kohärentem Laserlicht und Überlagerung des von dem Objekt gestreuten Laserlichts mit einem unbeeinflussten Referenzstrahl in einer lichtempfindlichen Schicht. Sogenannte holographische Beugungsgitter erhält man, wenn die in der lichtempfindlichen Schicht überlagerten Lichtstrahlen aus räumlich ausgedehnten, einheitlichen kohärenten Wellenfeldern bestehen. Die Einwirkung der überlagerten Wellenfelder auf die lichtempfindliche Schicht, wie etwa einen photographischen Film oder eine Photoresistschicht, erzeugt dort ein holographisches Beugungsgitter, das beispielsweise in Form heller und dunkler Linien in einem photographischen Film oder in Form von Bergen und Tälern in einer Photoresistschicht konserviert werden kann. Da die Lichtstrahlen in diesem Fall nicht durch ein Objekt gestreut worden sind, erzeugt das holographische Beugungsgitter lediglich einen optisch variablen Farbeindruck, jedoch keine Bilddarstellung.

Die Druckschrift WO 2005/038500 A1 beschreibt ein Verfahren zum Erzeugen von Gitterbildern, bei dem ein Gitterbild aus mehreren Teilbereichen zusammengesetzt wird, die jeweils ein bestimmtes Beugungsgitter mit einer einheitlichen Gitterkonstante und einer einheitlichen Winkelorientierung enthalten. Die diffraktiven Teilbereiche liegen dabei in flächenförmiger, streifenförmiger oder pixelartiger Ausführung nebeneinander. Solche Beugungsgitter lassen sich durch direkte oder indirekte optische Belichtung, Prägemastering oder Elektronenstrahllithographie herstellen.

Ebenfalls bekannt sind Mattstrukturbilder, die sich aus Teilbereichen zusammensetzen, die nicht beugende, sondern streuende Gitter enthalten. So sind in der Druckschrift WO 2005/071444 A2 Gitterfelder mit Strichgitterlinien beschrieben, die durch die Parameter Orientierung, Krümmung, Beabstandung und Profilierung charakterisiert sind, wobei zumindest einer dieser Parameter über der Fläche des Gitterfelds variiert. Variiert zumindest einer der Parameter zufällig, so ergeben sich sogenannte Mattstrukturen, die bei Betrachtung keine diffraktiven Effekte, sondern Streueffekte zeigen und ein mattes, vorzugsweise keinerlei Farbigkeit zeigendes Erscheinungsbild aufweisen.

EP 0 467 601 A2 beschreibt ein Verfahren zum Bilden holographischer Beugungsgitterstrukturen, wobei das Beugungsgitterbild eine Vielzahl individueller Pixel aufweist, die jeweils ein holographisches Beugungsgitter mit vorbestimmten Gitterparametern aufweisen.

Ausgehend davon liegt der Erfindung die Aufgabe zugrunde, ein Gitterbild der eingangs genannten Art weiter zu verbessern und insbesondere unter Beibehaltung der bisherigen Vorteile Gitterbilder mit neuen optischen Effek- Effekten zu schaffen und/ oder die Fälschungssicherheit der Gitterbilder weiter zu erhöhen.

Diese Aufgabe wird durch das Gitterbild mit den Merkmalen des Hauptanspruchs gelöst. Ein Herstellungsverfahren, ein Sicherheitselement, ein Sicherheitspapier sowie ein Datenträger mit einem solchen Gitterbild sind in den nebengeordneten Ansprüchen angegeben. Weiterbildungen der Erfindung sind Gegenstand der Unteransprüche.

Gemäß der Erfindung weist ein gattungsgemäßes Gitterbild die Merkmale des Anspruchs 1 auf.

Bevorzugt umfassen die Gittermuster diffraktive Gittermuster, die parallele, äquidistante Strichgitterlinien enthalten, die durch die Gitterlinien-Parameter Beabstandung, Winkelorientierung und Profilierung charakterisiert sind. Durch die konstante Winkelorientierung der Strichgitterlinien ist eine Vorzugsrichtung des Gittermusters gegeben, die dazu führt, dass die Gittermuster aus einem festgelegten Betrachtungswinkel mit einem farbigen Erscheinungsbild visuell erkennbar sind. Die diffraktiven Gitterfelder können beispielsweise lineare Gitter, Subwellenlängengitter, Mottenaugenstrukturen oder dergleichen enthalten.

Nach einer ebenfalls bevorzugten Ausgestaltung umfassen die Gittermuster achromatische Gittermuster, die aus dem durch die Vorzugsrichtung festgelegten Betrachtungswinkel mit einem matten, vorzugsweise silbrigen Erscheinungsbild visuell erkennbar sind. Vorzugsweise sind die Strichgitterlinien der achromatischen Gittermuster durch die Gitterlinien-Parameter Orientierung, Beabstandung und Profilierung charakterisiert, wobei in jedem der achromatischen Gittermuster zumindest einer dieser Gitterlinien-Parameter mit einer vorgegebenen Streuung zufällig variiert, so dass die achromatischen Gittermuster jeweils durch die Gittermuster-Parameter mittlere Orientierung, Orientierungsstreuung, mittlere Beabstandung, Beabstandungsstreuung, Profilierung und Profilierungsstreuung charakterisiert sind.

Eine zufällige Variation eines Gitterlinien-Parameters bedeutet dabei, dass der Parameter einer bestimmten Wahrscheinlichkeitsfunktion (bei diskreten Parametern) bzw. Dichtefunktion (bei kontinuierlichen Parametern) gehorcht, die für jeden Wert des Parameters die Auftretenswahrscheinlichkeit bzw. die Wahrscheinlichkeitsdichte dieses Werts angibt. Wird die Häufigkeit der Parameterwerte der Gesamtheit der Strichgitterlinien eines Gitterfelds betrachtet, so wird bei einer Auftragung dieser Häufigkeiten näherungsweise die zugehörige Wahrscheinlichkeitsfunktion bzw. Dichtefunktion dieses Parameters rekonstruiert. Der Parameterwert für eine bestimmte, beliebig herausgegriffene Gitterlinie lässt sich dagegen nicht auf offensichtliche Weise vorhersagen. Die Wahrscheinlichkeitsfunktionen bzw. Dichtefunktionen unterschiedlicher Parameter sind dabei grundsätzlich von einander unabhängig. In manchen Ausgestaltungen kann es sich jedoch anbieten, die Wahrscheinlichkeitsfunktionen bzw. Dichtefunktionen zweier oder mehrerer Parameter miteinander zu verknüpfen.

Die in Betracht kommenden Wahrscheinlichkeitsfunktionen bzw. Dichtefunktionen können sich über einen bestimmten Bereich erstrecken und dort konstant sein, können ein Maximum aufweisen, insbesondere symmetrisch oder asymmetrisch um dieses Maximum verteilt sein, können neben einem Maximum mindestens ein weiteres Nebenmaximum aufweisen, können mehrere etwa gleich hohe Maxima aufweisen, können diskret sein (Wahrscheinlichkeitsfunktionen), d.h. die Gittermuster weisen bezüglich des betrachteten Parameters nur bestimmte, diskrete Werte auf, können kontinuierlich oder quasikontinuierlich sein (Dichtefunktionen), d.h. es treten alle Werte in einem bestimmten kontinuierlichen Bereich auf, oder sie können auch bereichsweise kontinuierlich oder quasikontinuierlich und bereichsweise diskret sein.

Variiert ein Gitterlinien-Parameter über die Fläche eines Gittermusters zufällig, so kann das Gittermuster durch den mittleren Wert dieses Parameters und dessen Streuung beschrieben werden. Auch ein nicht-variierender Parameter kann durch einen mittleren Wert und eine Streuung beschrieben werden, indem für die Streuung der Wert Null gesetzt wird. Der mittlere Wert eines solchen Gittermuster-Parameters ist dann gleich dem konstanten Wert des zugehörigen, nicht-variierenden Gitterlinien-Parameters.

Der Wert des Parameters "mittlere Orientierung" legt dabei eine Vorzugsrichtung eines Gittermusters fest, wenn zugleich die Orientierungsstreuung kleiner als +/-180° ist. Im Rahmen der Erfindung ist die Orientierungsstreuung typischerweise sogar kleiner als +/- 45° und beträgt bevorzugt weniger als +/-10°, besonders bevorzugt weniger als +/- 3°, und insbesondere weniger als +/- 0.3°.

Ein Gitterbild kann ausschließlich diffraktive oder ausschließlich achromatische Gittermuster enthalten, oder es können diffraktive und achromatische Gittermuster in einem Gitterbild kombiniert werden.

In einer vorteilhaften Ausgestaltung der Erfindung ist jedes Gitterfeld neben dem ihm zugeordneten Gittermuster nur mit Nachbar-Gittermustern gefüllt ist, die unmittelbar angrenzenden Gitterfeldern zugeordnet sind.

Der Grad der Füllung eines Gitterfelds mit einem Gittermuster kann quantitativ durch die Flächendeckung in Prozent angegeben werden. Da jedes Gitterfeld überwiegend mit dem ihm zugeordneten Gittermuster gefüllt ist, ist die Flächendeckung jedes Gitterfelds mit dem ihm zugeordneten Gittermuster (Eigenflächendeckung) größer als die Flächendeckung mit jedem anderen Gittermuster. In bevorzugten Gestaltungen ist die Eigenflächendeckung sogar größer als 50 % und liegt vorzugsweise zwischen 50 % und 95 %.

Die Flächendeckung eines Gitterfelds mit Gittermustern muss räumlich nicht konstant sein. Zur genaueren Beschreibung kann daher die lokale Flächendeckung angegeben werden, die ortsabhängig die lokale Bedeckung eines Gitterfelds mit einem bestimmten Gittermuster angibt. Um einen glatten Funktionsverlauf zu erhalten, wird die lokale Flächendeckung zweckmäßig über einen geeigneten Flächenbereich gemittelt.

Erfindungsgemäß nimmt die lokale Flächendeckung jedes Gitterfelds mit dem ihm zugeordneten Gittermuster (lokale Eigenflächendeckung) vom Rand des Gitterfelds nach innen hin zu. Gleichzeitig nimmt die lokale Flächendeckung mit Nachbar-Gittermustern für jedes Gitterfeld vom Rand des Gitterfelds nach innen hin ab.

Die Breite der Gitterfelder kann ebenfalls mithilfe der lokalen Eigenflächendeckung definiert werden, nämlich durch die Halbwertsbreite der lokalen Flächendeckungsfunktion, die entsprechend der üblichen Definition diejenige Breite ist, bei der der Wert der lokalen Flächendeckungsfunktion auf die Hälfte ihres Maximalwerts abgesunken ist. Die so definierten Halbwertsbreiten der Gitterfelder sind vorzugsweise größer als 20 $\mu$m, besonders bevorzugt größer als 500 $\mu$m, und liegen insbesondere zwischen 1 mm und 2 mm.

Die Gitterfelder können beispielsweise durch schmale Streifen mit einer Breite im oben angegebenen Bereich oder auch durch kleine Flächenelemente beliebiger Form gebildet sein, deren Abmessungen in jeder Richtung vorzugsweise größer als 500 $\mu$m sind, und die insbesondere zwischen 1 mm und 2 mm liegen. In vorteilhaften Gestaltungen folgen die Gitterfelder mit ihrer Form konzentrisch den Umrisskonturen eines vorgegebenen Motivs und weisen dabei eine Breite bzw. Halbwertsbreite auf, die vorzugsweise größer als 500 $\mu$m ist, und die insbesondere zwischen 1 mm und 2 mm liegt.

Die Nachbar-Gittermuster liegen in jedem Gittermuster mit Vorteil in Form diskreter Pixelelemente vor. Die Pixelelemente könnten beliebige Formen aufweisen und liegen beispielsweise in Form von Kreisscheiben, Ellipsenscheiben, Rechtecken oder Sternen vor.

Vorzugsweise weisen die Pixelelemente eine größte Abmessung auf, die unterhalb von 200 $\mu$m, vorzugsweise unterhalb von 100 $\mu$m, und damit unter der Auflösungsgrenze des menschlichen Auges liegt. Die Größe der Pixelelemente kann, muss jedoch nicht konstant sein. Insbesondere kann die Größe der Pixelelemente, die mit einem bestimmten Gittermuster gefüllt sind, mit Vorteil mit zunehmendem Abstand von dem zugeordneten Gitterfeld abnehmen, was visuell einer Abnahme der Beimischung weiter entfernter Gitterfelder entspricht. Dadurch nimmt auch die Größe der Pixelelemente jeweils vom Rand eines Gitterfelds nach innen hin ab, wie weiter unter in einem konkreten Ausführungsbeispiel illustriert.

Auch die Anordnung der Pixelelemente ist grundsätzlich beliebig, vorzugsweise sind die Pixelelemente jedoch periodisch oder quasiperiodisch angeordnet.

Die Gittermuster der Gitterfelder sind vorzugsweise elektronenstrahllithographisch erzeugt. Diese Technik ermöglicht es, Gittermuster herzustellen, bei denen für jede einzelne Gitterlinie die Parameter Orientierung, Beabstandung und Profilierung eindeutig vorgegeben werden können. Bei der Erzeugung eines Gittermusters kann damit auch eine gewünschte Zufallsverteilung der Parameter Orientierung, Beabstandung und Profilierung der Gitterlinien mit einer vorgegebenen Wahrscheinlichkeits- bzw. Dichtefunktion verwirklicht werden.

Es hat sich als zweckmäßig herausgestellt, wenn die Strichgitterlinien eine Linienprofiltiefe zwischen etwa 100 nm und etwa 400 nm aufweisen. Das Verhältnis von Linienbreite zur mittleren Beabstandung in den Gittermustern beträgt vorteilhaft etwa 1:2. Die Strichgitterlinien weisen mit Vorteil ein sinoidales Profil, ein symmetrisches Dreiecksprofil (Sägezahnprofil) oder ein Rechtecksprofil (Binärstruktur) auf. Es versteht sich, dass grundsätzlich auch beliebige andere Profile einsetzbar sind, wobei sich jedoch Sägezahnprofile durch einen besonders hohe Leuchtkraft und sinoidale Profile durch eine zuverlässige Herstellung bewährt haben.

Der Gitterlinien-Parameter Beabstandung bzw. der Gittermuster-Parameter mittlere Beabstandung liegt zweckmäßig zwischen 100 nm und 10 $\mu$m, bevorzugt zwischen 300 nm und 3000 nm, besonders bevorzugt zwischen 500 nm und 1600 nm. Der Wert des Gittermuster-Parameters Orientierungsstreuung beträgt vorzugsweise weniger als +/-10°, bevorzugt weniger als +/- 3°, besonders bevorzugt weniger als +/- 0.3°.

In einer vorteilhaften Erfindungsvariante enthält das Gitterbild ein Bewegungsbild, also ein Bild, das unter unterschiedlichen Kippwinkeln ein vorgegebenes Bildmotiv in unterschiedlichen Bewegungszuständen zeigt, so dass für den Betrachter beim Kippen des Gitterbildes ein Bewegungsbild entsteht.

Nach einer weiteren vorteilhaften Erfindungsvariante enthält das Gitterbild ein Pumpbild, also ein Bild, das unter unterschiedlichen Kippwinkeln eine sich vergrößernde oder verkleinernde Umrisslinie eines vorgegebenen Bildmotivs zeigt, so dass für den Betrachter beim Kippen des Gitterbildes ein Pumpbild entsteht.

Gemäß einer weiteren vorteilhaften Erfindungsvariante enthält das Gitterbild ein Rotationsbild, also ein Bild, das unter unterschiedlichen Kippwinkeln gegeneinander gedrehten Ansichten eines vorgegebenen Bildmotivs zeigt, so dass für den Betrachter beim Kippen des Gitterbildes ein Rotationsbild entsteht.

Das erfindungsgemäße Gitterbild selbst ist vorzugsweise mit einem reflektierenden oder hochbrechenden Material beschichtet. Als reflektierende Materialien kommen alle Metalle und viele Metalllegierungen in Betracht. Beispiele für geeignete hochbrechende Materialien sind CaS, $CrO_2$, ZnS, $TiO_2$ oder $SiO_x$. Mit Vorteil besteht ein signifikanter Unterschied zwischen dem Brechungsindex des Mediums, in das das Gitterbild eingebracht ist, und dem Brechungsindex des hochbrechenden Materials, wobei die Brechungsindexdifferenz vorzugsweise größer als 0,3, insbesondere sogar größer als 0,5 ist. Das Gitterbild kann in eingebetteter oder nicht eingebetteter Ausgestaltung erzeugt werden, wobei zur Einbettung beispielsweise PVC, PET, Polyester, oder eine UV-Lackschicht verwendet werden kann.

Es versteht sich, dass sich die erfindungsgemäßen Gitterbilder mit weiteren visuellen und/oder maschinenlesbaren Sicherheitsmerkmalen kombinieren lassen. Beispielsweise kann das Gitterbild mit Funktionsschichten, wie etwa polarisierenden, phasenschiebenden, leitfähigen, magnetischen und/oder lumineszierenden Schichten versehen sein.

In einer besonders vorteilhaften Ausgestaltung weist das Gitterbild einen farbkippenden Dünnschichtaufbau auf. Dabei kann die gesamte Fläche des Gitterbilds oder auch nur eine Teilfläche mit dem Dünnschichtaufbau versehen sein. Der Dünnschichtaufbau kann je nach gewünschter Anwendung opak oder semitransparent ausgebildet sein und umfasst zumindest drei Schichten. Insbesondere kann der Schichtaufbau eine Reflexionsschicht, eine Absorberschicht und eine zwischen Reflexionsschicht und Absorberschicht angeordnete dielektrische Abstandsschicht umfassen.

Die Erfindung umfasst auch ein Verfahren zum Herstellen eines Gitterbilds mit den Merkmalen des Anspruchs 12.

Die Gitterfelder werden dabei mit Vorteil elektronenstrahllithographisch erzeugt. Zur Erzeugung der oben genannten reflektierenden Schichten, hochbrechenden Schichten und Dünnschichten können unterschiedliche Bedampfungsverfahren zum Einsatz kommen, wie etwa PVD-Verfahren mit Schiffchenbedampfung, Bedampfung durch Widerstandsheizung, Bedampfung durch Induktionsheizung, Elektronenstrahlbedampfung, Sputtern (DC und AC) oder Lichtbogenbedampfung. Die Schichten können auch durch CVD aufgebracht werden, beispielsweise durch Sputtern im reaktiven Plasma oder eine andere plasmaunterstützte Bedampfungsart. Dielektrikumsschichten können beispielsweise auch aufgedruckt werden.

Die oben genannte Kombination eines erfindungsgemäßen diffusen Gitterbilds mit einem farbkippenden Dünnschichtaufbau ist sehr schwer zu fälschen, da die Technologien für die Herstellung der beiden Elemente nur schwer zu beschaffen sind. Darüber hinaus sind durch die Abstimmung der Farbeffekte der Gitterfelder des Gitterbilds und des Dünnschichtaufbaus neuartige visuelle Effekte möglich.

Die Erfindung umfasst ferner ein Sicherheitselement mit einem Gitterbild der oben beschriebenen Art. Das Sicherheitselement kann insbesondere ein Sicherheitsfaden, ein Etikett oder ein Transferelement sein. Die Erfindung umfasst auch ein Sicherheitspapier mit einem solchen Sicherheitselement sowie einen Datenträger, der mit einem Gitterbild, einem Sicherheitselement oder einem Sicherheitspapier der beschriebenen Art ausgestattet ist. Bei dem Datenträger kann es sich insbesondere um eine Banknote, ein Wertdokument, einen Pass, eine Ausweis- oder Kreditkarte oder eine Urkunde handeln. Das beschriebene Sicherheitselement, Sicherheitspapier oder der Datenträger kann zur Absicherung von Gegenständen beliebiger Art eingesetzt werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1 eine schematische Darstellung einer Banknote mit einem erfindungsgemäßen Sicherheitselement

Fig. 2 eine detailliertere Aufsicht auf das Sicherheitselement der Fig. 1,

Fig. 3 ein erfindungsgemäßes Gitterbild mit einer einfachen Abfolge nebeneinanderliegender Gitterfelder zur Illustration der Vermischung der Gittermuster benachbarter Gitterfelder,

Fig. 4 in (a) ein Gitterbild mit in x-Richtung nebeneinanderliegenden Gitterfeldern und in (b) für jedes Gitterfeld die glatte Flächendeckungsfunktion,

Fig. 5 in (a) ein diffraktives Gittermuster und in (b) ein achromatisches Gittermuster, und

Fig. 6 einen Querschnitt durch ein erfindungsgemäßes Sicherheitselement mit Dünnschichtaufbau.

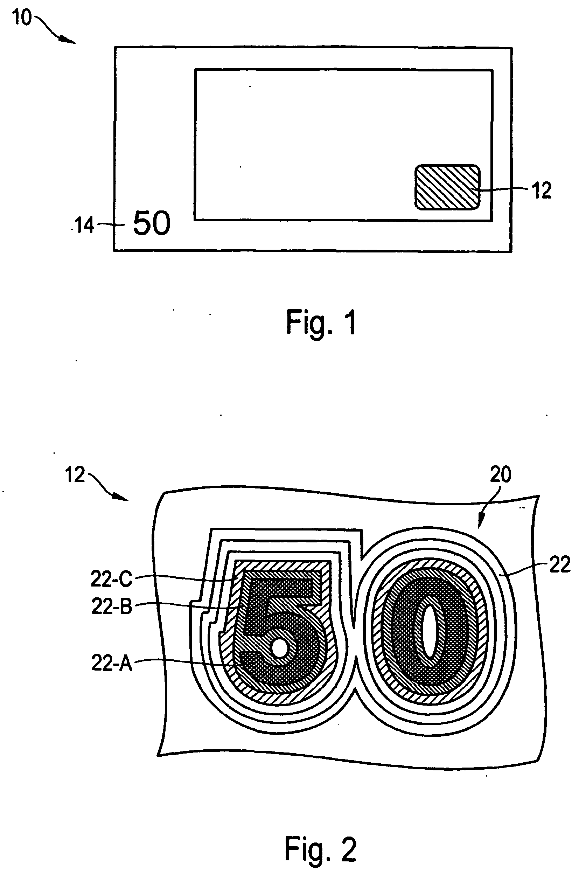

Die Erfindung wird nun am Beispiel von Sicherheitselementen für Banknoten erläutert. Fig. 1 zeigt dazu eine schematische Darstellung einer Banknote 10 mit einem erfindungsgemäßen Sicherheitselement 12, das ein Gitterbild mit einem diffusen Pumpeffekt enthält.

Im Ausführungsbeispiel der Fig. 1 ist das Sicherheitselement 12 durch ein auf die Banknote aufgeklebtes Transferelement 12 gebildet. Die Erfindung ist allerdings nicht auf Transferelemente und auf Banknoten beschränkt, sondern kann überall eingesetzt werden, wo Gitterbilder zur Anwendung kommen können, beispielsweise bei Uhrenzifferblättern und Modeschmuck, bei Etiketten auf Waren und Verpackungen, bei Sicherheitselementen auf Dokumenten, Ausweisen, Pässen, Kreditkarten, Gesundheitskarten usw. Bei Banknoten und ähnlichen Dokumenten kommen außer Transferelementen beispielsweise auch Sicherheitsfäden und außer Aufsichtselementen auch Durchsichtselemente, wie Durchsichtsfenster, zur Ausstattung mit Gitterbildern infrage.

Wie in der detaillierteren Aufsicht der Fig. 2 dargestellt, enthält das Sicherheitselement 12 ein Gitterbild 20 mit einer Vielzahl von aneinandergrenzenden Gitterfeldern 22, von denen drei Gitterfelder 22-A, 22-B, 22-C für die weitere Erläuterung mit verschiedenen Schraffuren hervorgehoben sind.

Das Gitterfeld 22-A bildet durch seine Form die Ziffernfolge "50", die zugleich die Denomination 14 der Banknote 10 (Fig. 1) darstellt. Die angrenzenden Gitterfelder 22-B, 22-C und die weiteren, in Fig. 2 nicht schraffierten Gitterfelder 22 folgen jeweils konzentrisch den Umrisskonturen der Ziffernfolge "50" des Gitterfelds 22-A.

Jedes der Gitterfelder 22 enthält verschiedene Gittermuster, die jeweils eine Vorzugsrichtung aufweisen, die einen Betrachtungswinkel festlegt, in den das jeweilige Gittermuster das einfallende Licht beugt oder streut. Jedem der Gitterfelder 22 ist dabei ein bestimmtes Gittermuster zugeordnet, mit dem es überwiegend gefüllt ist und das daher den visuellen Eindruck des Gitterfelds dominiert. Beispielsweise ist bei senkrechtem einfallendem Licht das Gitterfeld 22-A unter einem schrägen Betrachtungswinkel von 45° gelb leuchtend sichtbar, das Gitterfeld 22-B unter einem schrägen Betrachtungswinkel von 40° orange leuchtend und das Gitterfeld 22-C unter einem schrägen Betrachtungswinkel von 35° rot leuchtend.

Im Ausführungsbeispiel sind die Vorzugsrichtungen der zugeordneten Gittermuster benachbarter Gitterfelder 22 dabei in an sich bekannter Weise so aufeinander abgestimmt, dass sie beim Kippen des Sicherheitselements nacheinander Licht zum Auge des Betrachter lenken. Für den Betrachter ergibt sich dadurch beim Kippen ein Pumpeffekt, bei dem sich der Umriss der Ziffernfolge "50" je nach Kipprichtung vergrößert oder verkleinert.

Erfindungsgemäß sind nun die Gittermuster benachbarter Gitterfelder 22 in der nachfolgend genauer beschriebenen Weise miteinander vermischt, so dass der Betrachter aus einer bestimmten Betrachtungsrichtung nicht nur das jeweils dominierende Gitterfeld 22 sieht, sondern auch einen diffus gerasterten Anteil der benachbarten Gitterfelder wahrnimmt. Beispielsweise sieht der Betrachter bei dem Ausführungsbeispiel der Fig. 2 bei einem schrägen Betrachtungswinkel von 40° nicht nur das Gitterfeld 22-B orange aufleuchten, sondern er sieht auch einen kleineren, diffus gerasterten Anteil des Gitterfelds 22-A gelb aufleuchten und einen kleineren, diffus gerasterten Anteil des Gitterfelds 22-C rot aufleuchten. Mit anderen Worten ausgedrückt, bedeutet dies, dass sich die Gitterfelder 22-A, 22-B und 22-C des erwähnten Beispiels gegenseitig durchdringen.

Durch die Beimischung diffuser Anteile der Gittermuster benachbarter Gitterfelder erscheint der Pumpeffekt dem Betrachter mit einem stetigen und weichen Bildübergang, insbesondere im Vergleich zu herkömmlichen Gitterbildern mit scharf begrenzten Gitterfeldern. Zudem weisen die diffusen Pumpbilder eine erhöhte Fälschungssicherheit auf, da sie nicht oder nur sehr eingeschränkt mittels der verbreiteten klassischen optischen Direktbelichtung oder der ebenfalls gebräuchlichen Dot-Matrix-Maschinen nachgestellt werden können, z. B. bei nur wenigen Werten für Azimutwinkel/Gitterkonstante. Für die in dieser Anmeldung diskutierten und beschriebenen Mattstrukturen sind die beiden oben genannten Techniken darüber hinaus gar nicht einsetzbar. Im Ergebnis können die erfindungsgemäßen Sicherheitselemente mittels Elektronenstrahltechniken somit mit einer aus dem Stand der Technik nicht ansatzweise erreichten optischen Brillanz hergestellt werden.

Als weitere Vorteile können neben der bereits erwähnten erhöhten Fälschungssicherheit ferner die sehr gute Kombinierbarkeit der erfindungsgemäßen Gitterbilder mit beliebigen anders ausgebildeten und andere diffraktive Effekte aufweisenden Gitterbildern sowie die Angabe eines neuartigen und für den Betrachter sehr attraktiven optischen Effekts genannt werden.

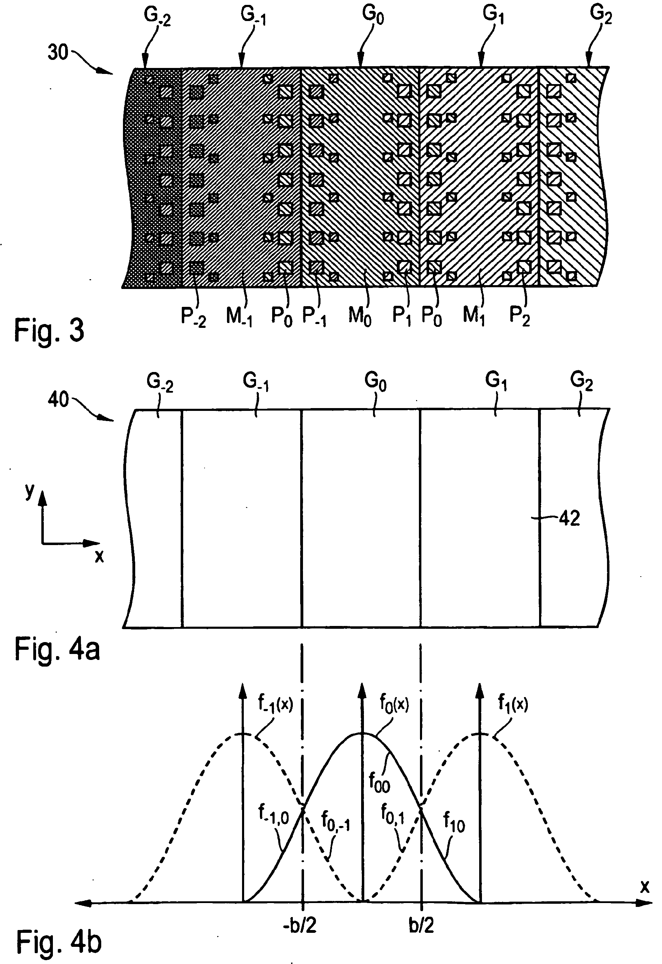

Zur Illustration des Vorgehens bei der Vermischung der Gittermuster benachbarter Gitterfelder zeigt Fig. 3 ein Gitterbild 30 mit einer einfachen Abfolge nebeneinanderliegender Gitterfelder $G_i$, von denen die mit $G_{-2}$, $G_{-1}$, $G_0$, $G_1$ und $G_2$ bezeichneten Gitterfelder dargestellt sind. Jedem Gitterfeld $G_i$ ist ein Gittermuster $M_i$ mit einer Vorzugsrichtung zugeordnet, die den Betrachtungswinkel festlegt, in den das jeweilige Gittermuster beugt oder streut, so dass es von dieser Betrachtungsrichtung aus gesehen farbig oder silbrig matt in Erscheinung tritt.

Um die diffuse Bildwirkung des Gitterbilds zu erzeugen, ist erfindungsgemäß jedes Gitterfeld $G_i$ überwiegend mit dem ihm zugeordneten Gittermuster $M_i$ und zusätzlich teilweise mit Nachbar-Gittermustern $M_{i-1}$, $M_{i+1}$, $M_{i-2}$, $M_{i+2}$ ... gefüllt. Im einfachsten Fall ist jedes Gitterfeld $G_i$ neben dem ihm zugeordneten Gittermuster $M_i$ nur mit Nachbar-Gittermustern $M_{i-1}$ und $M_{i+1}$ gefüllt, die unmittelbar angrenzenden Gitterfeldern $G_{i-1}$ und $G_{i+1}$ zugeordnet sind, wie etwa im Ausführungsbeispiel der Fig. 3 gezeigt.

Beispielsweise ist das Gitterfeld $G_0$ überwiegend mit dem Gittermuster Mo und teilweise mit den Nachbar-Gittermustern $M_{-1}$ und $M_{+1}$ gefüllt, das Gitterfeld $G_1$ ist überwiegend mit dem Gittermuster $M_1$ und teilweise mit den Nachbar-Gittermustern $M_0$ und $M_2$ gefüllt, etc.

Um einen stärkeren diffusen Eindruck zu erzeugen, ist es jedoch auch möglich, ein Gitterfeld $G_i$ teilweise mit Gittermustern $M_{i-k}$ und $M_{i+k}$ für k>1, also mit Gittermustern aus weiter entfernten Gitterfeldern zu füllen. In der Praxis nimmt der Anteil der Gittermuster weiter entfernter Gitterfelder mit dem Abstand dieser Gitterfelder vom Gitterfeld $G_i$ rasch ab, so dass zumeist nur nächste, übernächste und gegebenenfalls überübernächste Nachbar-Gittermuster vermischt sind.

Im Ausführungsbeispiel der Fig. 3 liegen die Nachbar-Gittermuster in jedem Gitterfeld $G_i$ in Form diskreter Pixelelemente $P_{i-1}$ und $P_{i+1}$ vor, wobei die Pixelelemente $P_{i-1}$ und $P_{i+1}$ jeweils das Gittermuster $M_{i-1}$ und $M_{i+1}$ enthalten, das den Nachbar-Gitterfeldern $G_{i-1}$ bzw. $G_{i+1}$ zugeordnet ist. Beispielsweise enthält das Gitterfeld Go neben dem überwiegend vorliegenden Gittermuster Mo diskrete Pixelelemente $P_{-1}$ und $P_{+1}$ mit den Nachbar-Gittermustern $M_{-1}$ und $M_{+1}$, das Gitterfeld $G_1$ enthält neben dem überwiegend vorliegenden Gittermuster $M_1$ diskrete Pixelelemente $P_0$ und $P_2$ mit den Nachbar-Gittermustern Mo und $M_2$, etc.

Die Pixelelemente $P_j$ können rechteckig mit unterschiedlichen Größen ausgebildet sein, wie in Fig. 3 dargestellt, oder können allgemein in Form von Kreisscheiben, Ellipsenscheiben, Rechtecken oder Sternen vorliegen, wobei die Ausbildung in Form von Kreisscheiben gegenwärtig bevorzugt ist.

Die Größe der Pixelelemente $P_j$ ist grundsätzlich frei wählbar, bevorzugt liegt sie jedoch etwa im Bereich des Auflösungsvermögens des menschlichen Auges, und liegt besonders bevorzugt sogar unterhalb des Auflösungsvermögens des menschlichen Auges. Die Pixelelemente $P_j$ weisen dazu insbesondere eine größte Abmessung auf, die unterhalb von 200 $\mu$m, vorzugsweise unterhalb von 100 $\mu$m liegt. Die Größe der Pixelelemente $P_j$ muss dabei nicht konstant sein, sie nimmt vielmehr vorzugsweise mit zunehmendem Abstand von dem zugeordneten Gitterfeld $G_j$ ab, wie in Fig. 3 illustriert. Dies entspricht einer Abnahme der Beimischung weiter entfernter Gitterfelder und erzeugt visuell ein natürlich wirkendes Ausblenden des Gitterfelds $G_j$ bei zunehmender Verkippung.

Die Pixelelemente $P_j$ können zufällig und regellos innerhalb eines Gitterfelds $G_i$ angeordnet sein. Vorzugsweise liegen sie jedoch geordnet, beispielsweise in einem periodischen Raster, einer quasiperiodischen Anordnung, wie etwa einem Penrose-Muster, oder in einer fraktalen Anordnung vor.

Um die Flächendeckung der Gitterfelder mit Gittermustern quantitativ zu beschreiben, kann die Flächendeckung $F_{ij}$ des Gitterfelds $G_i$ mit dem Gittermuster $M_j$ in Prozent angegeben werden. Im Ausführungsbeispiel der Fig. 3 beträgt etwa die Eigenflächendeckung $F_{ii}$, also die Flächendeckung jedes Gitterfelds $G_i$ mit dem ihm zugeordneten Gittermuster $M_i$ jeweils

$$F_{ii} = 90\%,$$

und die Flächendeckungen $F_{i,i-1}$ und $F_{i,i+1}$, die den Anteil der Nachbar-Gittermustern $M_{i-1}$ und $M_{i+1}$ im Gitterfeld $G_i$ angeben, betragen jeweils

$$F_{i,i-1} = F_{i,i+1} = 5\%.$$

Gittermuster $M_j$, die weiter entfernten Gitterfeldern $G_j$ zugeordnet sind, sind im Ausführungsbeispiel der Fig. 3 im Gitterfeld $G_i$ nicht vertreten, so dass

$$F_{i,i-k} = F_{i,i+k} = 0\ \%, \quad \text{für } k > 1$$

gilt. Dabei ist die Summe

$$\sum_j F_{i,j} = 100\ \%,$$

das Gitterfeld $G_i$ also insgesamt vollständig mit Gittermustern gefüllt.

Wie aus Fig. 3 ersichtlich, muss die Flächendeckung mit Gittermustern benachbarter Gitterfelder räumlich nicht konstant sein. Zur genaueren Beschreibung der Flächendeckung kann daher die lokale Flächendeckung $f_{ij}$ angegeben werden, die ortsabhängig die lokale Bedeckung des Gitterfelds $G_i$ mit dem Gittermuster $M_j$ angibt, wobei in der Praxis über einen geeigneten, mehrere Pixelelemente umfassenden Flächenbereich gemittelt wird, um einen glatten Funktionsverlauf zu erhalten.

Erfindungsgemäß nimmt die lokale Eigenflächendeckung $f_{ii}$ jedes Gitterfelds $G_i$ von der Mitte jeden Gitterfelds zum Rand des Gitterfelds $G_i$ hin ab und erstreckt sich als lokale Fremdflächendeckung $f_{i-1,i}$ bzw. $f_{i+1,i}$ in die Nachbar-Gitterfelder $G_{i-1}$ und $G_{i+1}$, wie im Ausführungsbeispiel der Fig. 3 dargestellt.

Da die Pixelelemente $P_j$ in der Praxis wesentlich kleiner als die Gitterfelder $G_i$ sind, kann die lokale Flächendeckung nach Mittelung in der Regel sehr gut durch eine glatte Funktion beschrieben werden, wie nunmehr mit Bezug auf Fig. 4 erläutert.

Fig. 4(a) zeigt zunächst wieder ein Gitterbild 40 mit in x-Richtung nebeneinanderliegenden Gitterfeldern $G_i$, von denen die Gitterfelder $G_{-2}$, $G_{-1}$, $G_0$, $G_1$ und $G_2$ dargestellt sind. Die Gitterfelder $G_i$ sind jeweils in Form von in y-Richtung lang gestreckten Streifen 42 gebildet. Die Breite der Streifen in x-Richtung beträgt jeweils b, so dass sich beispielsweise das Gitterfeld $G_0$ von x = -b/2 bis x = +b/2 erstreckt.

Fig. 4(b) zeigt für jedes Gitterfeld $G_i$ die glatte Flächendeckungsfunktion $f_i(x)$, bei der die Flächendeckung in y-Richtung über die Streifenlänge und in x-Richtung über die Abmessung der Pixelelemente gemittelt wurde, um glatte Kurvenverläufe zu erhalten.

Mit Bezug auf Fig. 4(b) beschreibt beispielsweise die lokale Flächendeckungsfunktion fo(x) für x = -b/2 bis x = +b/2 gerade die Eigenflächendeckung foo des Gitterfelds $G_0$, also die Flächendeckung des Gitterfeld $G_0$ mit dem Gittermuster Mo. Für x = b/2 bis 3b/2 beschreibt die Flächendeckungsfunktion fo(x) die Flächendeckung $f_{1,0}$, also die Flächendeckung des Gitterfelds $G_1$ mit dem Gittermuster Mo, und für x = -b/2 bis -3b/2 beschreibt die Flächendeckungsfunktion fo(x) die Flächendeckung $f_{-1,0}$, also die Flächendeckung des Gitterfelds $G_{-1}$ mit dem Gittermuster $M_0$.

Umgekehrt wird die Flächendeckung eines Gitterfelds $G_i$ vollständig durch seine eigene Flächendeckungsfunktion und die Flächendeckungsfunktionen der Nachbar-Gitterfelder bestimmt. So ist für das Gitterfeld $G_0$ am Ort x die Flächendeckung mit dem Gittermuster Mo (Eigenflächendeckung $f_{00}$) durch fo(x) gegeben, die Flächendeckung $f_{0,1}$ mit dem Gittermuster $M_1$ durch $f_1(x-b)$ und die Flächendeckung $f_{0,-1}$ mit dem Gittermuster $M_{-1}$ durch $f_{-1}(x+b)$.

Dabei gilt für jeden Ort x jeden Gitterfelds $G_i$, dass die Summe aller Flächendeckungen maximal 100% betragen kann. Im Ausführungsbeispiel sind die Funktionen $f_i(x)$ so gewählt, dass ihre Summe an jedem Ort gerade 100% ergibt, so dass stets eine vollständige Flächendeckung vorliegt. Beispielsweise gilt für das Gitterfeld Go der Fig. 4(a):

$$f_0(x) + f_1(x-b) + f_{-1}(x+b) = 100\ \%, \quad \text{für } x = -b/2 \text{ bis } x = +b/2.$$

Als lokale Flächendeckungsfunktionen $f_i(x)$ können beispielsweise Gaußfunktionen oder modifizierte Gaußfunktionen mit einem Cutoff in den nächsten oder übernächsten Nachbar-Gitterfeldern eingesetzt werden.

Insbesondere bei stark vermischten Gittermustern kann es sich anbieten, die Breite der Gitterfelder $G_i$ durch die Halbwertsbreite der lokalen Flächendeckungsfunktionen $f_i(x)$ zu definieren. Die Halbwertsbreite der lokalen Flächendeckungsfunktionen ist dabei entsprechend der üblichen Definition diejenige Breite, bei der die lokale Flächendeckungsfunktion auf die Hälfte ihres Maximalwerts abgesunken ist. Wie in Fig. 4(b) illustriert ist etwa für das Gitterfeld Go

$$f_0(-b/2) \; = f_0(+b/2) \; = \; f_0(0)/2,$$

so dass die Halbwertsbreite des Gitterfelds Go gleich b ist, wie oben angegeben. In der Praxis ist die Halbwertsbreite der Gitterfelder vorzugsweise größer als 500 $\mu$m und liegt beispielsweise im Ausführungsbeispiel der Figuren 2 bis 4 zwischen etwa 1 mm und 2 mm.

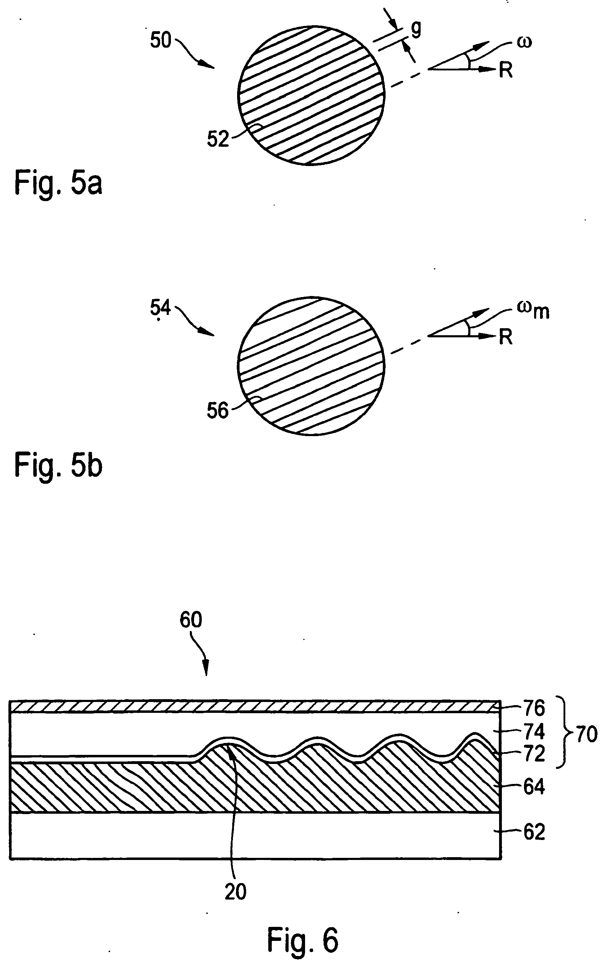

Die Gittermuster $M_j$ der Gitterfelder $G_i$ können sowohl durch diffraktive Gittermuster als auch durch achromatische Gittermuster gebildet sein. Fig. 5(a) zeigt dazu ein diffraktives Gittermuster 50, das parallele Strichgitterlinien 52 enthält, die durch die Gitterlinien-Parameter Beabstandung, Winkelorientierung und Profilierung charakterisiert sind. Der Parameter Winkelorientierung gibt dabei die azimutale Orientierung der einzelnen Gitterlinien 52 eines Gittermusters 50 an, die beispielsweise durch einen Winkel $\omega$ bezogen auf eine Referenzrichtung R ausgedrückt werden kann. Der Parameter "Beabstandung" gibt den Abstand benachbarter Gitterlinien 52 an, der beispielsweise durch eine Gitterkonstante g ausgedrückt werden kann, und der Parameter "Profilierung" beschreibt das Linienprofil der Gitterlinien 52, beispielsweise ein sinusförmiges Linienprofil.

Die Winkelorientierung der Gitterlinien 52 bestimmt denjenigen Betrachtungswinkel, aus dem das Gittermuster 50 visuell erkennbar ist, während die Beabstandung der Gitterlinien die Farbe festlegt, in der das Gittermuster 50 aus diesem Betrachtungswinkel erscheint. Durch die Profilierung der Gitterlinien 52 kann eine symmetrische Beugung (gleiche Anteile in die positiven und negativen Beugungsordnungen) oder eine asymmetrische Beugung mit besonders hoher Beugungseffizienz in bestimmte Beugungsordnungen eingestellt werden.

Fig. 5(b) zeigt ein achromatisches Gittermuster 54, das zwar ebenfalls ein betrachtungswinkelabhängiges, jedoch nicht-farbiges, sondern silbrig mattes Erscheinungsbild zeigt. Die Gitterlinien 56 des achromatischen Gittermusters 54 sind zunächst ebenfalls durch die Gitterlinien-Parameter Orientierung, Beabstandung und Profilierung gegeben, allerdings variiert zumindest einer der Gitterlinien-Parameter Orientierung, Beabstandung und Profilierung mit einer vorgegebenen Streuung zufällig, so dass das Gittermuster 54 insgesamt durch die Gittermuster-Parameter mittlere Orientierung, Orientierungsstreuung, mittlere Beabstandung, Beabstandungsstreuung, Profilierung und Profilierungsstreuung der Gitterlinien charakterisiert ist. Eine zufällige Variation bedeutet dabei, dass der entsprechende Parameter einer bestimmten Wahrscheinlichkeitsfunktion oder Dichtefunktion gehorcht, wie oben genauer erläutert.

Der Wert des Parameters "mittlere Orientierung" legt eine Vorzugsrichtung des jeweiligen Gittermusters 54 fest, die zusammen mit den Werten der weiteren Parameter einen Betrachtungsbereich bestimmt, aus dem das Gittermuster 54 visuell in Erscheinung tritt. Der Betrachtungsbereich kann beispielsweise durch einen Winkelbereich von +/- 10° um eine Vorzugsbetrachtungsrichtung gegeben sein. Wie oben bereits erläutert, bildet das Gittermuster durch die zufällige Variation zumindest eines der Gittermuster-Parameter keine diffraktive Struktur, sondern eine Mattstruktur, bei der nicht diffraktive, sondern achromatische Streueffekte das visuelle Erscheinungsbild dominieren, so dass das Gittermuster für den Betrachter im Wesentlichen ein nicht-farbiges, silbrig mattes Erscheinungsbild erzeugt.

Zur Illustration sind bei dem Gittermuster 54 der Fig. 5(b) Gitterlinien 56 gezeigt, deren Orientierungen mit einer Orientierungsstreuung von $\Delta\omega = 2°$ zufällig um eine mittlere Orientierung $\omega_m$ bezogen auf die Referenzrichtung R schwanken.

Eine weitere Möglichkeit, ein achromatisches Gittermuster mit einer Vorzugsrichtung zu erzeugen, besteht darin, dass nur der Parameter Beabstandung der Strichgitterlinien über die Fläche des Gittermusters willkürlich zufällig variiert und die anderen charakteristischen Parameter konstant gehalten werden. Eine solche willkürlich zufällige Beabstandung kann beispielsweise durch aufeinanderfolgendes Belichten mehrerer Gitter gleicher Orientierung, aber unterschiedlicher Gitterkonstante erhalten werden. Die dadurch gezielt eingebrachte Unordnung erzeugt eine achromatisch streuende Gitterstruktur mit silbrig mattem Erscheinungsbild. Gleichzeitig weist die Gitterstruktur aufgrund der parallelen Gitterlinien eine Vorzugsrichtung für die Streuung auf und führt so insgesamt zu einem betrachtungswinkelabhängigen, nicht-farbigen visuellen Erscheinungsbild.

In einer bevorzugten Ausgestaltung ist ein erfindungsgemäßes Gitterbild mit einem weiteren Sicherheitsmerkmal, insbesondere einer farbkippenden Dünnschichtanordnung oder einer hochbrechenden Schicht, kombiniert. Fig. 6 zeigt dazu im Querschnitt ein Sicherheitselement 60 mit einem Gitterbild 20 der in Fig. 2 gezeigten Art. Das Sicherheitselement 60 enthält ein transparentes Folienmaterial 62 mit einer Lackschicht 64, in die das Gitterbild 20 eingeprägt ist. Darüber ist ein vollflächiger Dünnschichtaufbau 70 aufgedampft, der im Ausführungsbeispiel aus einer Absorberschicht 72, einer hochbrechenden dielektrischen Schicht 74 und einer reflektierenden Schicht 76 besteht. Die Schichten des Dünnschichtaufbaus 70 wurden dabei im Vakuumdampfverfahren aufgebracht.

Je nach der gewünschten späteren Anordnung des Sicherheitselements 60 auf einem Datenträger kann die Schichtenfolge des Dünnschichtaufbaus 70 variiert werden. Beispielsweise kann auf dem Gitterbild 20 auch zuerst eine reflektierende Schicht, dann eine hochbrechende dielektrische Schicht und darüber eine Absorberschicht aufgebracht sein. Die Kombination eines erfindungsgemäßen Gitterbilds 20 mit einem Dünnschichtaufbau 70 verbindet die Farbwirkung des Gitterbilds mit dem Farbkippeffekt des Dünnschichtaufbaus und erlaubt so besonders ansprechende Farbeffekte. Gleichzeitig wird durch die Wechselwirkung der beiden Farbwirkungen die Fälschungssicherheit des Sicherheitselements erhöht.

Bezugszeichenliste

| | |
|---|---|
| 10 | Banknote |
| 12 | Sicherheitselement |
| 14 | Denomination |
| 20 | Gitterbild |
| 22 | Gitterfelder |
| 22-A, 22-B, 22-C | Gitterfelder |
| 30 | Gitterbild |
| 40 | Gitterbild |
| 42 | Streifen |
| 50 | diffraktives Gittermuster |
| 52 | Strichgitterlinien |
| 54 | achromatisches Gittermuster |
| 56 | Gitterlinien |
| 60 | Sicherheitselement |
| 62 | Folienmaterial |
| 64 | Lackschicht |
| 70 | Dünnschichtaufbau |
| 72 | Absorberschicht |
| 74 | dielektrische Schicht |
| 76 | reflektierende Schicht |
| $G_i$ | Gitterfelder |
| $M_i$ | Gittermuster |
| Pi | Pixelelemente |
| $f_i(x)$ | Flächendeckungsfunktion |

**Patentansprüche**

1. Gitterbild (20,30,40) mit einer Vielzahl von aneinandergrenzenden Gitterfeldern (22, 22-A, 22-B, 22-C, $G_i$) mit einem diffusen, betrachtungswinkelabhängigen visuellen Erscheinungsbild, bei dem

   - jedem Gitterfeld (22, 22-A, 22-B, 22-C, $G_i$) ein Gittermuster (50, 54, $M_i$) aus einer Vielzahl von geraden Strichgitterlinien (52, 56) zugeordnet ist,
   - jedes zugeordnete Gittermuster (50, 54, $M_i$) eine Vorzugsrichtung aufweist, die einen Betrachtungswinkel festlegt, aus dem das jeweilige Gittermuster (50, 54, $M_i$) visuell erkennbar ist,
   - jedes Gitterfeld (22, 22-A, 22-B, 22-C, $G_i$) überwiegend mit dem ihm zugeordneten Gittermuster (50, 54, $M_i$) gefüllt ist, und
   - jedes Gitterfeld (22,22-A, 22-B, 22-C, $G_i$) zusätzlich teilweise mit Nachbar-Gittermustern gefüllt ist, die benachbarten Gitterfeldern zugeordnet sind,
   - wobei die lokale Flächendeckung ($F_{ij}$) jedes Gitterfelds (22, 22-A, 22-B, 22-C, $G_i$) mit dem ihm zugeordneten Gittermuster (50, 54, Mi), lokale Eigenflächendeckung genannt, vom Rand des Gitterfelds (22, 22-A, 22-B, 22-C, $G_i$) nach innen hin zunimmt und wobei die lokale Flächendeckung ($F_{ij}$) mit Nachbar-Gittermustern für jedes Gitterfeld (22, 22-A, 22-B, 22-C, $G_i$) vom Rand des Gitterfelds (22, 22-A, 22-B, 22-C, $G_i$) nach innen hin abnimmt.

2. Gitterbild nach Anspruch 1, **dadurch gekennzeichnet, dass** die Gittermuster diffraktive Gittermuster umfassen, die parallele, äquidistante Strichgitterlinien enthalten, die durch die Gitterlinien-Parameter Beabstandung, Winkelorientierung und Profilierung charakterisiert sind, und wobei die Gittermuster aus dem durch die Vorzugsrichtung festgelegten Betrachtungswinkel mit einem farbigen Erscheinungsbild visuell erkennbar sind.

**3.** Gitterbild nach Anspruch 1 oder 2, **dadurch gekennzeichnet, dass** die Gittermuster achromatische Gittermuster umfassen, die aus dem durch die Vorzugsrichtung festgelegten Betrachtungswinkel mit einem matten, vorzugsweise silbrigen Erscheinungsbild visuell erkennbar sind.

**4.** Gitterbild nach Anspruch 3, **dadurch gekennzeichnet, dass** die Strichgitterlinien der achromatischen Gittermuster durch die Gitterlinien-Parameter Orientierung, Beabstandung und Profilierung charakterisiert sind, und in jedem der achromatischen Gittermuster zumindest einer dieser Gitterlinien-Parameter mit einer vorgegebenen Streuung zufällig variiert, so dass die achromatischen Gittermuster jeweils durch die Gittermuster-Parameter mittlere Orientierung, Orientierungsstreuung, mittlere Beabstandung, Beabstandungsstreuung, Profilierung und Profilierungsstreuung charakterisiert sind.

**5.** Gitterbild nach wenigstens einem der Ansprüche 1 bis 4, **dadurch gekennzeichnet, dass** jedes Gitterfeld neben dem ihm zugeordneten Gittermuster nur mit Nachbar-Gittermustern gefüllt ist, die unmittelbar angrenzenden Gitterfeldern zugeordnet sind.

**6.** Gitterbild nach wenigstens einem der Ansprüche 1 bis 5, **dadurch gekennzeichnet, dass** die Flächendeckung jedes Gitterfelds mit dem ihm zugeordneten Gittermuster, Eigenflächendeckung genannt, zwischen 50 % und 95 % liegt.

**7.** Gitterbild nach wenigstens einem der Ansprüche 1 bis 6, **dadurch gekennzeichnet, dass** die Gitterfelder jeweils eine durch die lokale Eigenflächendeckung definierte Halbwertsbreite aufweisen, die vorzugsweise größer als 20 $\mu$m ist, besonders bevorzugt größer als 500 $\mu$m ist, und insbesondere zwischen 1 mm und 2 mm liegt.

**8.** Gitterbild nach wenigstens einem der Ansprüche 1 bis 7, **dadurch gekennzeichnet, dass** die Gitterfelder mit ihrer Form konzentrisch den Umrisskonturen eines vorgegebenen Motivs folgen.

**9.** Gitterbild nach wenigstens einem der Ansprüche 1 bis 8, **dadurch gekennzeichnet, dass** in jedem Gitterfeld die Nachbar-Gittermuster in Form diskreter Pixelelemente vorliegen, wobei die Pixelelemente bevorzugt eine größte Abmessung aufweisen, die unterhalb von 200 $\mu$m, vorzugsweise unterhalb von 100 $\mu$m liegt.

**10.** Gitterbild nach Anspruch 9, **dadurch gekennzeichnet, dass** die Pixelelemente in Form von Kreisscheiben, Ellipsenscheiben, Rechtecken oder Sternen vorliegen, und/oder dass die Pixelelemente periodisch oder quasiperiodisch angeordnet sind.

**11.** Gitterbild nach wenigstens einem der Ansprüche 1 bis 10, **dadurch gekennzeichnet, dass** das Gitterbild ein Bewegungsbild, ein Pumpbild oder ein Rotationsbild enthält, und/oder dass das Gitterbild einen farbkippenden Dünnschichtaufbau aufweist.

**12.** Verfahren zum Herstellen eines Gitterbilds (20,30,40), bei dem

- in einem Substrat eine Vielzahl von aneinandergrenzenden Gitterfeldern (22, 22-A, 22-B, 22-C, $G_i$) mit einem diffusen, betrachtungswinkelabhängigen visuellen Erscheinungsbild erzeugt werden, indem
- jedem Gitterfeld (22, 22-A, 22-B, 22-C, $G_i$) ein Gittermuster (50, 54, $M_i$) aus einer Vielzahl von geraden Strichgitterlinien (52, 56) zugeordnet wird, wobei jedes zugeordnete Gittermuster (50, 54, $M_i$) eine Vorzugsrichtung aufweist, die einen Betrachtungswinkel festlegt, aus dem das jeweilige Gittermuster (50, 54, $M_i$) visuell erkennbar ist, und wobei die Gittermuster (50, 54, $M_i$) bevorzugt elektronenstrahllithographisch erzeugt werden,
- jedes Gitterfeld (22, 22-A, 22-B, 22-C, $G_i$) überwiegend mit dem ihm zugeordneten Gittermuster (50, 54, $M_i$) gefüllt wird,
- jedes Gitterfeld (22, 22-A, 22-B, 22-C, $G_i$) zusätzlich teilweise mit Nachbar-Gittermustern gefüllt wird, die benachbarten Gitterfeldern zugeordnet sind,
- wobei die lokale Flächendeckung ($F_{ij}$) jedes Gitterfelds (22, 22-A, 22-B, 22-C, $G_i$) mit dem ihm zugeordneten Gittermuster (50, 54, $M_i$), lokale Eigenflächendeckung genannt, vom Rand des Gitterfelds (22, 22-A, 22-B, 22-C, $G_i$) nach innen hin zunimmt und wobei die lokale Flächendeckung ($F_{ij}$) mit Nachbar-Gittermustern für jedes Gitterfeld (22, 22-A, 22-B, 22-C, $G_i$) vom Rand des Gitterfelds (22, 22-A, 22-B, 22-C, $G_i$) nach innen hin abnimmt.

**13.** Sicherheitselement mit einem Gitterbild nach wenigstens einem der Ansprüche 1 bis 11 oder einem nach Anspruch 12 hergestellten Gitterbild, wobei das Sicherheitselement bevorzugt ein Sicherheitsfaden, ein Etikett oder ein Transferelement ist.

**14.** Sicherheitspapier mit einem Gitterbild nach wenigstens einem der Ansprüche 1 bis 11, einem nach Anspruch 12 hergestellten Gitterbild, oder einem Sicherheitselement nach Anspruch 13.

**15.** Datenträger mit einem Gitterbild nach wenigstens einem der Ansprüche 1 bis 11, einem nach Anspruch 12 hergestellten Gitterbild, einem Sicherheitselement nach Anspruch 13, oder einem Sicherheitspapier nach Anspruch 14, wobei der Datenträger bevorzugt eine Banknote, ein Wertdokument, ein Pass, eine Ausweis- oder Kreditkarte oder eine Urkunde ist.

**Claims**

**1.** A grating image (20,30,40) having a plurality of adjacent grating fields (22, 22-A, 22-B, 22-C, $G_i$) having a diffuse, viewing-angle-dependent visual appearance, in which

- to each grating field (22, 22-A, 22-B, 22-C, $G_i$) is allocated a grating pattern (50, 54, $M_i$) composed of a plurality of straight grating lines (52, 56),
- each allocated grating pattern (50, 54, $M_i$) has a preferred direction that establishes a viewing angle from which the respective grating pattern (50, 54, $M_i$) is visually perceptible,
- each grating field (22, 22-A, 22-B, 22-C, $G_i$) is filled predominantly with the grating pattern (50, 54, $M_i$) allocated to it, and
- each grating field (22, 22-A, 22-B, 22-C, $G_i$) is additionally partially filled with adjacent grating patterns that are allocated to adjacent grating fields,
- the local areal coverage ($F_{ij}$) of each grating field (22, 22-A, 22-B, 22-C, $G_i$) with the grating pattern (50, 54, $M_i$) allocated to it, called local areal self coverage, increasing from the edge of the grating field (22, 22-A, 22-B, 22-C, $G_i$) inward, and the local areal coverage ($F_{ij}$) with adjacent grating patterns for each grating field (22, 22-A, 22-B, 22-C, $G_i$) decreasing from the edge of the grating field (22, 22-A, 22-B, 22-C, $G_i$) inward.

**2.** The grating image according to claim 1, **characterized in that** the grating patterns comprise diffractive grating patterns that include parallel, equidistant grating lines that are **characterized by** the grating line parameters spacing, angle orientation and profile, and the grating patterns being visually perceptible having a colored appearance from the viewing angle established by the preferred direction.

**3.** The grating image according to claim 1 or 2, **characterized in that** the grating patterns comprise achromatic grating patterns that are visually perceptible having a matte, preferably silvery appearance from the viewing angle established by the preferred direction.

**4.** The grating image according to claim 3, **characterized in that** the grating lines of the achromatic grating patterns are **characterized by** the grating line parameters orientation, spacing and profile, and in each of the achromatic grating patterns, at least one of said grating line parameters varies randomly with a specified distribution, such that the achromatic grating patterns are each **characterized by** the grating pattern parameters mean orientation, orientation distribution, mean spacing, spacing distribution, profile and profile distribution.

**5.** The grating image according to at least one of claims 1 to 4, **characterized in that,** besides the grating pattern allocated to it, each grating field is filled only with adjacent grating patterns that are allocated to immediately adjacent grating fields.

**6.** The grating image according to at least one of claims 1 to 5, **characterized in that** the areal coverage of each grating field with the grating pattern allocated to it, called the areal self coverage, is between 50% and 95%.

**7.** The grating image according to at least one of claims 1 to 6, **characterized in that** the grating fields each comprise a full width at half maximum that is defined by the local areal self coverage and that is preferably greater than 20 $\mu$m, particularly preferably greater than 500 $\mu$m, and that especially lies between 1 mm and 2 mm.

**8.** The grating image according to at least one of claims 1 to 7, **characterized in that,** with their shape, the grating fields concentrically follow the outline contours of a specified motif.

**9.** The grating image according to at least one of claims 1 to 8, **characterized in that,** in each grating field, the adjacent grating patterns are present in the form of discrete pixel elements, the pixel elements preferably having a maximum dimension that is below 200 $\mu$m, preferably below 100 $\mu$m.

10. The grating image according to claim 9, **characterized in that** the pixel elements are present in the form of circular disks, elliptical disks, rectangles or stars, and/ or **in that** the pixel elements are arranged periodically or quasiperiodically.

11. The grating image according to at least one of claims 1 to 10, **characterized in that** the grating image includes a motion image, a pump image or a rotation image, and/or **in that** the grating image comprises a color-shifting thin-film structure.

12. A method for manufacturing a grating image (20, 30, 40), in which

- in a substrate, a plurality of adjacent grating fields (22, 22-A, 22-B, 22-C, Gi) having a diffuse, viewing-angle-dependent visual appearance are produced in that
- to each grating field (22, 22-A, 22-B, 22-C, $G_i$) is allocated a grating pattern (50, 54, $M_i$) composed of a plurality of straight grating lines (52,56), each allocated grating pattern (50, 54, $M_i$) having a preferred direction that establishes a viewing angle from which the respective grating pattern (50, 54, $M_i$) is visually perceptible, and the grating patterns (50, 54, $M_i$) preferably being produced electron beam lithographically,
- each grating field (22, 22-A, 22-B, 22-C, $G_i$) is filled predominantly with the grating pattern (50, 54, $M_i$) allocated to it,
- each grating field (22, 22-A, 22-B, 22-C, $G_i$) is additionally partially filled with adjacent grating patterns that are allocated to adjacent grating fields,
- the local areal coverage ($F_{ij}$) of each grating field (22, 22-A, 22-B, 22-C, $G_i$) with the grating pattern (50, 54, $M_i$) allocated to it, called the local areal self coverage, increasing inward from the edge of the grating field (22, 22-A, 22-B, 22-C, $G_i$), and the local areal coverage ($F_{ij}$) with adjacent grating patterns for each grating field (22, 22-A, 22-B, 22-C, $G_i$) decreasing inward from the edge of the grating field (22, 22-A, 22-B, 22-C, $G_i$).

13. A security element having a grating image according to at least one of claims 1 to 11, or a grating image manufactured according to claim 12, the security element preferably being a security thread, a label or a transfer element.

14. A security paper having a grating image according to at least one of claims 1 to 11, a grating image manufactured according to claim 12, or a security element according to claim 13.

15. A data carrier having a grating image according to at least one of claims 1 to 11, a grating image manufactured according to claim 12, a security element according to claim 13, or a security paper according to claim 14, the data carrier preferably being a banknote, a value document, a passport, an identification or credit card, or a certificate.

**Revendications**

1. Image à réseau (20, 30, 40) avec une pluralité de champs à réseau (22, 22-A, 22-B, 22-C, $G_i$) limitrophes les uns des autres avec un aspect visuel diffus dépendant de l'angle d'observation, dans laquelle

- on associe à chaque champ à réseau (22, 22-A, 22-B, 22-C, $G_i$) un modèle de réseau (50, 54, $M_i$) en une pluralité de lignes droites de réseau à traits (52, 56),
- chaque modèle de réseau (50, 54, $M_i$) associé présentant une direction préférentielle qui détermine un angle d'observation à partir duquel le modèle de réseau respectif (50, 54, $M_i$) peut être reconnu visuellement,
- chaque champ à réseau (22, 22-A, 22-B, 22-C, $G_i$) étant majoritairement rempli avec le modèle de réseau (50, 54, $M_i$) qui lui est associé, et
- chaque champ à réseau (22, 22-A, 22-B, 22-C, $G_i$) étant additionnellement partiellement rempli avec des modèles de réseau voisins qui sont associés à des champs à réseau voisins,
- dans laquelle la couverture locale de surface ($F_{ij}$) de chaque champ à réseau (22, 22-A, 22-B, 22-C, $G_i$) avec le modèle de réseau (50, 54, $M_i$) qui lui est associé, dénommée couverture de surface propre locale, augmente vers l'intérieur à partir du bord du champ à réseau (22, 22-A, 22-B, 22-C, $G_i$) et dans laquelle la couverture locale de surface ($F_{ij}$) avec des modèles de réseau voisins pour chaque champ à réseau (22, 22-A, 22-B, 22-C, $G_i$) diminue vers l'intérieur à partir du bord du champ à réseau (22, 22-A, 22-B, 22-C, $G_i$).

2. Image à réseau selon la revendication 1, **caractérisée en ce que** les modèles de réseau comprennent des modèles de réseau de diffraction qui contiennent des lignes de réseau à traits parallèles équidistantes, lesquelles sont **caractérisées par** les paramètres de lignes de réseau d'espacement, d'orientation angulaire et de profilage, et dans laquelle les modèles de réseau sont reconnaissables visuellement avec un aspect coloré à partir de l'angle d'observation déterminé par la direction préférentielle.

3. Image à réseau selon la revendication 1 ou 2, **caractérisée en ce que** les modèles de réseau comprennent des modèles de réseau achromatiques, lesquels peuvent être reconnus visuellement avec un aspect mat, de préférence argenté, à partir de l'angle d'observation déterminé par la direction préférentielle.

4. Image à réseau selon la revendication 3, **caractérisée en ce que** les lignes de réseau à traits des modèles de réseau achromatiques sont **caractérisées par** les paramètres de lignes de réseau d'orientation, d'espacement et de profilage et en ce que, dans chacun des modèles de réseau achromatiques, au moins l'un de ces paramètres de lignes de réseau varie de manière aléatoire avec une dispersion prescrite de telle sorte que les modèles de réseau achromatiques sont respectivement **caractérisés par** les paramètres de modèle de réseau d'orientation moyenne, de dispersion d'orientation, d'espacement moyen, de dispersion d'espacement, de profilage et de dispersion de profilage.

5. Image à réseau selon l'une au moins des revendications 1 à 4, **caractérisée en ce que** chaque champ à réseau, en plus du modèle de réseau qui lui est associé, est rempli seulement avec des modèles de réseau voisins qui sont associés à des champs à réseau directement limitrophes.

6. Image à réseau selon l'une au moins des revendications 1 à 5, **caractérisée en ce que** la couverture de surface de chaque champ à réseau avec le modèle de réseau qui lui est associé, dénommée couverture de surface propre, est comprise entre 50% et 95%.

7. Image à réseau selon l'une au moins des revendications 1 à 6, **caractérisée en ce que** les champs à réseau présentent respectivement une largeur de valeur moyenne définie par la couverture de surface propre locale, laquelle est de préférence supérieure à 20 $\mu$m, de manière particulièrement préférée supérieure à 500 $\mu$m, et est en particulier comprise entre 1 mm et 2 mm.

8. Image à réseau selon l'une au moins des revendications 1 à 7, **caractérisée en ce que** les champs à réseau suivent concentriquement avec leur forme les contours d'un motif prescrit.

9. Image à réseau selon l'une au moins des revendications 1 à 8, **caractérisée en ce que** dans chaque champ à réseau, il y a les modèles de réseau voisins sous la forme d'éléments de pixel discrets, dans laquelle les éléments de pixel présentent de préférence une dimension la plus grande, laquelle se situe en-deçà de 200 $\mu$m, de préférence en-deçà de 100 $\mu$m.

10. Image à réseau selon la revendication 9, **caractérisée en ce que** les éléments de pixel se présentent sous la forme de disques circulaires, de disques elliptiques, de rectangles ou d'étoiles et/ou **en ce que** les éléments de pixel sont disposés de manière périodique ou quasi périodique.

11. Image à réseau selon l'une au moins des revendications 1 à 10, **caractérisée en ce que** l'image à réseau contient une image à mouvement, une image de pompage ou une image à rotation, et/ou **en ce que** l'image à réseau présente une configuration à couches minces à changement de couleur.

12. Procédé pour la fabrication d'une image à réseau (20, 30, 40), dans lequel

- dans un substrat, une pluralité de champs à réseau (22, 22-A, 22-B, 22-C, $G_i$) limitrophes les uns des autres avec un aspect visuel diffus dépendant de l'angle d'observation sont générés en ce que
- l'on associe à chaque champ à réseau (22, 22-A, 22-B, 22-C, $G_i$) un modèle de réseau (50, 54, $M_i$) en une pluralité de lignes droites de réseau à traits (52, 56), dans lequel chaque modèle de réseau (50, 54, $M_i$) associé présente une direction préférentielle qui détermine un angle d'observation à partir duquel le modèle de réseau (50, 54, $M_i$) respectif peut être reconnu visuellement, et dans lequel les modèles de réseau (50, 54, $M_i$) sont de préférence générés par lithographie à faisceau d'électrons,
- chaque champ à réseau (22, 22-A, 22-B, 22-C, $G_i$) étant majoritairement rempli avec le modèle de réseau (50, 54, $M_i$) qui lui est associé,
- chaque champ à réseau (22, 22-A, 22-B, 22-C, $G_i$) étant additionnellement rempli partiellement avec des modèles de réseau voisins qui sont associés à des champs à réseau voisins,
- dans lequel la couverture locale de surface ($F_{ij}$) de chaque champ à réseau (22, 22-A, 22-B, 22-C, $G_i$) avec le modèle de réseau (50, 54, $M_i$) qui lui est associé, dénommée couverture de surface propre locale, augmente vers l'intérieur à partir du bord du champ à réseau (22, 22-A, 22-B, 22-C, $G_i$) et dans laquelle la couverture locale de surface ($F_{ij}$) avec des modèles de réseau voisins pour chaque champ à réseau (22, 22-A, 22-B, 22-C, $G_i$) diminue vers l'intérieur à partir du bord du champ à réseau (22, 22-A, 22-B, 22-C, $G_i$).

13. Elément de sécurité avec une image à réseau selon l'une au moins des revendications 1 à 11 ou avec une image à réseau produite selon la revendication 12, dans lequel l'élément de sécurité est de préférence un fil de sécurité, une étiquette ou un élément de transfert.

14. Papier de sécurité avec une image à réseau selon l'une au moins des revendications 1 à 11, une image à réseau produite selon la revendication 12, ou un élément de sécurité selon la revendication 13.

15. Support de données avec une image à réseau selon l'une au moins des revendications 1 à 11, une image à réseau produite selon la revendication 12, un élément de sécurité selon la revendication 13 ou un papier de sécurité selon la revendication 14, dans lequel le support de données est de préférence un billet de banque, un document de valeur, un passeport, une carte d'identification ou de crédit ou un acte.

Fig. 1

Fig. 2

$G_{-2}$    $G_{-1}$    $G_0$    $G_1$    $G_2$

30

$P_{-2}$   $M_{-1}$   $P_0$   $P_{-1}$   $M_0$   $P_1$   $P_0$   $M_1$   $P_2$

## Fig. 3

$G_{-2}$    $G_{-1}$    $G_0$    $G_1$    $G_2$

40

y

x

42

## Fig. 4a

$f_{-1}(x)$    $f_0(x)$    $f_1(x)$

$f_{00}$

$f_{-1,0}$   $f_{0,-1}$   $f_{0,1}$   $f_{10}$

$-b/2$     $b/2$     x

## Fig. 4b

50

52

g

ω

R

**Fig. 5a**

54

56

ω m

R

**Fig. 5b**

60

76
74
72
70

64

62

20

**Fig. 6**

**EP 2 312 345 B1**

**IN DER BESCHREIBUNG AUFGEFÜHRTE DOKUMENTE**

**In der Beschreibung aufgeführte Patentdokumente**

- WO 2005038500 A1
- WO 2005071444 A2
- EP 0467601 A2